# EUROPÄISCHE PATENTSCHRIFT

(11) **EP 0 904 912 B1**
(45) Veröffentlichungstag und Bekanntmachung des Hinweises auf die Patenterteilung: **08.11.2000**
(21) Anmeldenummer: 98118097.9
(22) Anmeldetag: 24.09.1998
(51) Int. Cl.: B29C 43/20, B29B 17/00

(54) **Verfahren zur Herstellung von Platten**
Process for the manufacture of plates
Procédé pour la fabrication de plaques

(30) Priorität: 25.09.1997 DE 19743447
(43) Veröffentlichungstag der Anmeldung: 31.03.1999
(73) Patentinhaber: platec Plattentechnik GmbH, 04910 Elsterwerda (DE)
(72) Erfinder: Schmid, Roland, 73333 Gingen (DE)
(74) Vertreter: Haschick, Gerald

(56) Entgegenhaltungen:
- DD-A- 257 796
- DE-A- 3 806 108
- DE-A- 4 220 180
- DE-A- 4 220 547
- DATABASE WPI Section Ch, Week 9429 Derwent Publications Ltd., London, GB; Class A35, AN 94-238101 XP002900235 & JP 06 170873 A (KANTO JIDOSHA KOGYO KK) , 21. Juni 1994
- DATABASE WPI Section Ch, Week 9715 Derwent Publications Ltd., London, GB; Class A32, AN 97-154670 XP002900234 & AU 61991 96 A (FLIGHT GROUP LTD) , 13. Februar 1997

## Beschreibung

Die Erfindung betrifft ein Verfahren zur Herstellung von Platten, Formkörpern usw., die aus Recyclingstoffen bestehen, welche insbesondere in der Bauindustrie sowie in der Betonsteinfertigungsindustrie angewandt werden.

Aus der Praxis ist bereits bekannt, Verbundkörper aus festen und/oder faserförmigen Substanzen und einem geeigneten Bindemittel zu fertigen. Die Herstellung solcher Verbundkörper erfolgt üblicherweise in einer Form und unter Anwendung von Druck und Temperatur. Als Beispiel seien die bekannten Verfahren zur Herstellung von Spanplatten, Reibbelegen, Kraftfahrzeugreifen und andere technische Artikel aus elastomaren oder Phenolharzpreßmassen genannt.

Ferner sind in der Praxis auch Verfahren bekannt, bei denen als Substrat anteilig auch ausschließlich Recyclingstoffe eingesetzt werden. Bekannte Recyclingstoffe sind zum Beispiel Kabelschrott, zerkleinerte Polyurethanformteile, Gummimehl, Gummigranulat sowie Faserabfälle. Die DE 39 02 41 91 offenbart als Formteil eine Platte aus einem Granulat von Altreifenmaterial, das wahlweise mit einem Granulat größerer und kleinerer Körnung gleichen Wirkstoffs vermengt und nach Zumischung eines Zweikomponentenbindemittels unter Anwendung von äußerem Druck bei relativ niedrigen Temperaturen und einer Feuchte von nahezu 0 % in einer Form einstückig hergestellt ist. Der Zweikomponentenbinder ist ein Reaktionsprodukt mit einem in Harzbindemittel gemischten Kalzium- oder Magnesiumoxid und Polyester sowie Diolen, Wasser und anderen Isocyanat. Die Oberfläche solcher Formteile ist sowohl optisch als auch in bezug auf mechanische Beanspruchungen schlechter als die Oberfläche von Vergleichsformkörpern ohne Einmischung von Recyclingstoffen. Dadurch wird der Einsatzbereich der Formteile mit einem Anteil oder ganz aus Recyclingstoffen erheblich eingeschränkt und die Nutzung an sich wiederverwendbarer Materialien gebremst. Weiterhin ist die mechanische Festigkeit bzw. der E-Modul der erzeugten Formkörper für die besonderen Anwendungsfälle nicht geeignet. Aus der Praxis ist natürlich bereits bekannt, Formteile aus Recyclingstoffen nchträglich mit einer Oberflächenbeschichtung zu versehen. Diese Beschichtung kann ein Lackauftrag oder der Auftrag einer Deckschicht sein. Die DE 15 44 816 C3 beispielsweise offenbart ein elastisches Kunstbetonlaminat großer Druck- und Biegefestigkeit, die aus einer Trägerschicht aus Kunststoff und Faserverstärkern gebildet ist, auf die eine Deckschicht aus Kunstharz und Zusatzmaterialien, wie zum Beispiel Quarzsand und Kies, aufgebracht wird. Das Kunstharz der Deckschicht weist ein durch Polyaddition aus hydroxylgruppenhaltigen Polyestern und/oder Polyethern und Isocyanaten entstandenes Produkt auf, was während das Kunstharz der Trägerschicht als Polyesterharz ein Epoxyd oder Butadenmischpolymerrestharz ist. Die letztgenannten Verfahren verbessern zwar grundsätzlich die Oberfläche der Form- bzw. der Verbundkörper, haben jedoch eine Reihe von Nachteilen. Die erreichbaren Oberflächen sind optisch von begrenzter Qualität, da die Struktur des Form- oder Verbundteils durch die nachträgliche Beschichtung nicht vollständig überdeckt wird. Durch die nachträgliche Beschichtung von glatten oder flüssigen Polymeren können keine definierten geometrischen Oberflächenstrukturen erzielt werden. Die Haftung zwischen dem Form- bzw. Verbundteil und der später aufgetragenen Deckschicht ist schlecht, weil bei der Formteilfertigung Trennmittel verwendet werden, welche die Beschichtung erschweren und die Haftfertigkeit reduzieren. Ferner bedingte der Auftrag einer Deckschicht durch Sprühlackierung eine nicht gewünschte Umweltbelastung, und es ist schließlich neben dem Formgebungsprozeß ein zusdtzlicher Fertigungsschritt der Beschichtung erforderlich.

Bekannt ist weiterhin ein Verfahren zur Herstellung von Verbundkörpern DE 42 20 180. Die Besonderheit des Herstellungsverfahrens besteht darin, daß in der gleichen Form zunächst die Deckschicht eingebracht wird, welche in einer bestimten Form an- oder ausreagiert und anschließend eine Trägerschicht aus Gemisch aus anteiligem Recyclingstoff und einem Bindemittel auf die Deckschicht aufgeschichtet wird. Die Verbindung von Deckschicht und Trägerschicht erfolgt unter Druck und Temperatur. In die Trägerschicht ist wahlweise ein Schüttgut oder ein vorgeformter, nicht ausreagierter oder ein ausreagierter Körper. Der Nachteil dieser technischen Lösung liegt darin begründet, daß im Verfahrensprozeß zur Anfertigung der Deckschicht ein Fließvorgang und ein Aushärtevorgang in einer bestimmten Formfläche ausgeführt werden muß. Dieser Aushärtevorgang der Deckschicht erfordert einen weiteren technologischen Verfahrensschritt, welcher mit hohem technischen Aufwand ausgeführt werden muß. Ein zweiter Nachteil ist darin begründet, daß der Verbundkörper gemäß des Herstellungsverfahrens und nur mit einer einseitigen Deckschicht versehen ist, womit die Anwendungsbreite der Verbundkörper mit einer Deckschicht begrenzt ist.

Ziel der Erfindung ist es, ein Verfahren zur Herstellung von Platten, Formkörpern usw., die aus Recyclingstoffen bestehen, zu finden. Die verfahrensbedingten Platten bzw. Formkörper usw. sollen die technischen Merkmalen eines hohen E-Moduls ausweisen, hohe Bruchfestigkeit, hohe Abriebfestigkeit der Außenbeschichtung, wenig Ausdehnung bei Wärme sowie geringe bzw. keine Quellwirkung durch Feuchtigkeit.

Ausgehend von dem vorangegangenen Stand der Technik ist Aufgabe der Erfindung, ein Verfahren zur Herstellung von Platten, Formkörpern usw., die aus Recyclingstoffen bestehen, aufzuzeigen, wobei durch einfache Produktionsschritte eine Außenbeschichtung oberhalb und unterhalb eines Schichtstoffes, welcher aus Recyclingmaterial besteht, gefertigt wird.

Erfindungsgemäß wird die'Aufgabe dadurch gelöst, daß die Merkmale des Kennzeichens des Patentanspruchs 1 ausgeführt sind. Erfinderische Weiterbildungen und Ausgestaltungen sind in den Patentansprüchen 2 bis 6 unter Schutz gestellt. Durch die Lösungsmerkmale wird ein Verfahren zur Herstellung von Platten, Formkörpern usw., die aus Recyclingstoffen bestehen, mit optisch fehlerfreier mechanischer Abriebfestigkeit, gezielt profilierter und fest haftender Außenschicht, hoher Biege-E-Modul, wenig Ausdehnung bei Wärme, hohe Wasserabweisung und keine Quellwirkung durch Einfluß von Feuchtigkeit und wenig Ausdehnung bei Wärme offenbart und unter Patentschutz gestellt.

Das erfindungsgemäße Verfahren zur Herstellung von Platten, Formkörpern usw., die aus Recyclingstoffen bestehen, zeichnet sich durch folgende Verfahrensschritte aus.

In einem Preßvorgang, welcher vorzugsweise aus drei nachfolgenden verschiedenen Pressen zusammengestellt ist, wird im ersten Verfahrensgang eine Außenbeschichtung aus einer Polyesterfolie unterhalb in die Presse angeordnet, worauf nachfolgend ein vorgefertigtes Recyclinggemisch mit Bindemitteln als vorgeformter, im ausreagierten oder nicht ausreagierten Zustand als Schichtstoff aufgebracht wird. Dabei ist die Folie bzw. der Schichtstoff in eine vorgefertigte Form für die entsprechende Platte bzw. Formkörper eingebracht. Der Schichtstoff besteht aus Recyclingmaterial, welches hauptsächlich aus Polyurethanreststoffen in Brocken-, Flocken oder Mehlform zusammengesetzt ist. Zu diesen Polyurethanreststoffen werden je nach Anwendungsfall Glasfasern, Textilfasern, mineralische Stoffe wie Aluminiumoxid, Glas bzw. ein Bindemittel und Wasser, wobei das Bindemittel Isocyanat ist, beigefügt. Auf diesen Schichtstoff wird in nächster Folge eine weitere Außenbeschichtung aus einer Polyesterfolie auf die entsprechende Formgebung aufgelegt. In einem nachfolgenden Verfahrensschritt werden unter einem Druck von zirka 5 bar die Außenbeschichtungen mit dem Schichtstoff vorverdichtet und dem darauffolgenden Heißpreßvorgang unter einer Temperatur von 160 bis 190 °C und einem Druck von 150 bis 400 bar gepreßt. Durch diese entsprechenden Temperaturen bzw. Drücke werden die jeweiligen Außenschichten mit dem Schichtstoff, welcher vorzugsweise hauptsächlich Polyurethanreststoffe beinhaltet, miteinander verbunden. Als nächstfolgender Verfahrensschritt wird ein Kaltpressen unter einem Druck von 150 bis 400 bar ausgeführt. Als Bindemittel, welches mit den Recyclingstoffen als Schichtstoff beigemengt wird, wird vorzugsweise Isocyanat mit Wasser verwendet. Die beiden Außenschichten aus der Polyesterfolie werden in einem nicht ausgehärteten Zustand oberhalb und unterhalb des Schichtstoffes angeordnet und weisen je nach Anwendungsfall eine Stärke von.........bis.......mm auf. Die Recyclingmaterialien für den Schichtstoff bestehen zum größten Teil aus Polyurethanstoffen in Brocken-, Flocken- oder Mehlform sowie weiteren Zusätzen, welche sein können: Glasfasern, Textilfasern, mineralische Stoffe wie Aluminiumoxid, Glas, auch in Faserform. Hier werden je nach Anwendungsfall bestimmte Mischungsverhältnisse ausgeführt, welche so weit führen können, daß- ein Schichtstoff aus reinen Textilrecyclingstoffen hergestellt wird und nachfolgend in beschriebener Verfahrensweise mit den Außenschichten aus Polyvenylfolie verfahrenstechnisch verbunden wird.

Mit dem erfindungsgemäßen Herstellungsverfahren wird im einzelnen folgendes erreicht:
- eine optisch fehlerfreie, qualitativ hochwertige Oberfläche auf beiden Seiten wird dadurch erzeugt, daß ein Schichtstoff oberhalb und unterhalb mit einer Polyesterfolie unter Einflußnahme der Druck- und Temperaturwerte verbunden wird. Dabei ist erfindungswesentlich, daß bei gleichzeitigem Herstellen der Formpressung des Schichtstoffes eine Außenbeschichtung oberhalb und untrhalb des Schichtstoffes ausgeführt wird und damit technologisch gesehen wesentliche Verfahrensschritte in einem Verfahrensgang ausgeführt werden. Durch die derart verbesserte Oberflächenqualität beiderseitig erschließen sich den erfindungsgemäß gefertigten Platten, Formkörpern usw. Anwendungsgebiete, in denen Recyclingstoffe bisher weitgehend abgelehnt wurden, wie beispielsweise dekorative Bodenflächen für Innenräume und Außenanlagen, Sportböden oder Industrieböden, Innenauskleidung in der Fahrzeugindustrie, Platten für die Bauindustrie wie Verschalungen, Betonsteinunterlagen usw.;
- durch das Anbringen in der Verfahrenstechnologie der Außenschichten können durch gewählte Musterbestellungen der Außenbeschichtung bestimmte Oberflächengestaltungen beeinflußt werden, welche gerade für bestimmte Anwendungszwecke wesentliche Vorteile darstellt. Dabei können für die Platten bzw. Formkörper mit den entsprechenden Außenschichten bestimmte Anforderungen der Unfallsicherheit, der Reinigungsmöglichkeit und künstlerischen Gestaltung beeinflußt werden;
- es entfällt bei dem erfindungsgemäßen Herstellungsverfahren der zusätzliche, gesonderte Arbeitsgang des Außenbeschichtungsauftrages dadurch, daß die Außenschichten mit dem Verbund des Schichtstoffes in den ein und denselben Verfahrensschritten hergestellt wird. Dadurch lassen sich Platten bzw. Formkörper usw. nach den erfindungsgemäßen Verfahren technisch einfach und kostengünstig sowie mit hoher Oberflächenqualität beiderseitig anfertigen.

Durch die verfahrensbedingte Zusammensetzung des Schichtstoffes und der erfinderischen Außenbeschichtung mit der Polyesterfolie in den beschriebenen Verfahrensgängen entstehen Plattenformkörper usw. mit besonders guten physikalischen und chemischen Eigenschaften. Durch den vorwiegenden Einsatz von Polyurethanen bei der Zusammensetzung des Schichtstoffes entsteht eine geringe Wärmeausdehnung der hergestellten Platte bzw. Formkörpers. Durch die Beimischung von Glasfasern und Kunstfasern wird zum Beispiel ein hohes E-Modul dieses Formkörpers usw. erreicht. Weiterhin ist wesentlich, daß durch das verfahrensbedingte Herstellen der Platten und Formkörper eine Platte bzw. Formkörper aus einem Stück hergestellt wird, wobei keine Stoßstellen vorhanden sind. Durch die Verdichtung bis zu 1000 kg/cm³ wird erreicht, daß die verfahrensbedingte Platte eine geringe Wasseraufnahme und somit keine Quellwirkung durch äußere Einflüsse aufzeigt. Durch die Außenschichten aus der Polyesterfolie ist eine gute Abriebfestigkeit gegen mechanische Einwirkungen und Belastungen gegeben. Weiterhin ist die verfahrensbedingte Herstellung der Platte, Formkörper usw. nach Beendigung ihres speziellen Einsatzes jederzeit recycelbar und kann zur Herstellung neuer Platten verwendet werden. Als wesentlicher Vorteil des erfindungsgemäßen Verfahrens zeigt sich dabei, daß durch einen Arbeitsgang eine Herstellung einer Platte, Formkörper usw. und eine gleichzeitige Außenbeschichtung oben und unten ausgeführt wird. Die entsprechenden verfahrensbedingten Preßvorgänge der Außenschichten mit dem Schichtstoff in den vorgegebenen Parametergrößen wird erreicht, daß ohne zusätzliche Bindemittel eine Verbindung zwischen der Polyesterfolie und dem Polyurethankunststoffgemisch hergestellt wird.

Das Verfahren wird an einem Ausführungsbeispiel näher erläutert.

Dabei handelt es sich um ein Verfahren zur Herstellung von Platten, welche vorwiegend aus Polyurethanen besteht. Diese Platten werden hauptsächlich in der Betonsteinindustrie angewandt, wobei die Platten als Unterlage bei der Fertigung von Betonsteinen dienen. Hierbei ist es notwendig, daß die Platten wesentliche Merkmale aufweisen, wie zum Beispiel keine Stoßstellen, hohe Bruchfestigkeit, hohe Abriebfestigkeit, keine Ausdehnung bei Wärme, hoher Biege-E-Modul und Wasserabweisung aufweisen. Als erster Verfahrensschritt wird der entsprechende Schichtstoff aus den Recylingmaterialien, wobei hier vorwiegend Polyurethanreststoffe in Brocken-, Flocken- oder Mehlform und faserige Reststoffe verwendet werden, durch eine Aufbereitung gemischt und abgewogen. Hierbei wird eine Grobmischung der Grundstoffe durchgeführt und in eine nachfolgende Zerkleinerung gegeben. Die gesamte Mischung wird nun mit in einer Schneidmühle auf eine Korngröße zwischen 4 und 12 mm ausgeführt, wobei entsprechende Fasern, vorzugsweise Glasfasern oder Textilien, in einer langen Form zugeführt werden. Weiterhin wird ein Bindemittel auf Isocyanatbasis mit einer 5%igen Wasserzugabe beigemengt. Das Verhältnis zwischen Leim und dem gemahlenen Material beläuft sich auf zirka 12 %. Das Wasser dient als Reaktionsmittel für das Bindemittel, welches ein Isocyanat ist. Das spezifische Gewicht des gemahlenen Materials wird auf zirka 200 kg/m³ eingestellt. Nachfolgend wird die Mischung in einer speziellen Wägeeinrichtung für die entsprechenden Plattendicken bestimmt. Verfahrensbedingt geht man davon aus, daß es sich hierbei um einen nicht ausreagierten Schichtstoff handelt. Diese gesamte Mischung wird nun in die nachfolgenden Preßvorgänge eingebracht. Technologisch bedingt werden drei Preßvorgänge ausgeführt. Als erster Preßvorgang wird eine Vorverdichtung der eingebrachten Außenschichten und des Schichtstoffes durchgeführt, als zweiter Preßvorgang wird eine mit heizbaren Platten ausgestattete Presse angeschlossen, und als dritter Preßvorgang wird eine Presse, deren Platten von einem Kühlmedium durchströmt werden, angeschlossen. Verfahrenswesentlich ist es dabei, daß die Außenschicht aus einer glasfaserverstärkten Polyesterfolie mit einer Rohdichte von 1,65 bis 1,75 g/cm³ im ersten Verfahrensgang oberhalb und unterhalb des Schichtstoffes eingebracht wird. Bei dieser Polyesterfolie handelt es sich um ein SMC-Polyesterharz in Form einer Polyesterfolie, welche eine Biegefestigkeit von 180 bis 200 N/mm², ein Biege-E-Modul von 8 bis 10 kN/cm², eine Zugfestigkeit von 80 bis 100 N/mm², eine Schlagzähigkeit von 70 bis 90 kJ/m² und eine Druckfestigkeit < 200 N/mm² aufweist. Diese CMC-Polyesterharzfolie weist eine erhöhte Zähigkeit und Chemikalienbeständigkeit auf. Weiterhin ist niedrigere Wasseraufnahme und eine hohe Abriebfestigkeit der Oberfläche gegeben. Im ersten Verfahrensgang der Vorverdichtung wird eine Unterfolie aufgebracht, wobei nachfolgend der vorbereitete Schichtstoff als gegebene Mischung aufgebracht wird. Hierzu dient eine verfahrensbedingte Streumaschine, welche die homogene Streuung der beleimten Mischung auf das Pressezuführband ausführt. Zu der formgerechten Ausgestaltung der Platten werden ein oder mehrere vorgegebene bewegliche Formkästen verwendet, worin die Außenschichten bzw. der Schichtstoff eingebracht wird. In diesen Schüttrahmen wird vor Einbringung der Außenschicht ein Granulatfasergemisch aufgebracht, um eine problemlose Lösung der Platte beim Endprozeß zu gewährleisten. Ist nun die untere Außenschicht mit dem Schichtstoff homogen verteilt, wird die obere Außenschicht aus glasfaserverstärkter Polyesterfolie aufgelegt. Es findet nun eine Vorverdichtung von zirka 5 bar statt. Der gesamte Verdichtungsprozeß wird durch diese drei Preßvorgänge über ein Transportband realisiert. Nach der entsprechenden Vorverdichtung wird die vorgeformte Platte in eine Heißpresse weitergeleitet. In diese Heißpresse wird nun unter einer Temperatur von 160 bis 190 °C und einem Druck von 150 bis -400 bar die vorgeformte Platte mit den jeweiligen Außenschichten gepreßt. Dieser Preßvorgang mit den erhöhten Temperaturen bewirkt nun, daß aufgrund der thermischen Eigenschaften des Schichtstoffes und der Polyesterfolie eine feste Verbindung zwischen Außenbeschichtung und Schichtstoff entsteht, wobei gleichzeitig der Schichtstoff in seiner eigentlichen Zusammensetzung verbunden wird. Dabei finden aufgrund der Temperatureinwirkung der Heißpresse entsprechende thermische Verbindungsvorgänge der vorhandenen beinhalteten Polyurethane in dem Schichtstoff bzw. der Polyesterfolie statt. Die Zeitdauer der einzelnen Preßvorgänge handelt sich je nach der herzustellenden Plattendicke. Nachfolgend wird die Platte, bestehend aus dem Schichtstoff und den Außenbeschichtungen, in eine Kaltpresse aufgrund des Transportbandes weitergeleitet. Hierbei wird mit einem Druck 150 bis 400 bar ein letzter Preßvorgang durchgeführt, um somit die erforderlichen chemischen und physikalischen Eigenschaften zu erreichen. Gleichzeitig wird als Verfahrensgang eine Kalibrierung der Platte ausgeführt.

Nachfolgend wird ein technologischer Ablauf der Anlage skizziert. Die drei Pressen sind nach einer Streumaschine angeordnet, und ein umlaufendes Transportband verbindet di-e Streumaschine mit den drei Pressen, so daß ein beweglicher Formkasten verwendet werden kann und die Bewegung des Formkastens elektromechanisch mit der Steuerung der Pressen in Verbindung steht und die Zeit des Streuvorgangs sowie der erforderlichen Bewegung des Formkastens durch eine Steuerung zentral von einem Leitstand beeinflußt wird. Gleichzeitig wird die Bewegung und die Taktzeit der Pressen unabhängig voneinander so beeinflußt, daß der fliesbabdartige Durchlauf der Platten unterschiedlicher Stärke von der Vorpresse bis zur Kaltpresse in einer zentralen Steuerung eingeordnet ist. Gemäß des Ausführungsbeispiels zur verfahrensbedingten Herstellung von Platten ist die Zusammensetzung des Schichtstoffes des Plattengemisches wie folgt möglich. Hauptgrundstoff ist Polyurethenanreststoffe in Brocken-, Flocken oder Mehlform. Zusatzstoffe sind dabei Glasfasern oder Textilfasern und mineralische Stoffe wie Aluminium, Bauxid und Glas. Verwendet wird ein Bindemittel Isocyanat und Wasser als Reaktionsmittel.

Eine weitere Ausführungsvariante des erfindungsgemäßen Verfahrens wäre denkbar, indem bestimmte Formteile hergestellt werden. Unterschiedlich stellt sich dabei dar, daß die bestimmte Formgebung des Formbleches den Anforderungen des Formteils ausgefertigt ist. Hierbei werden die gleichen Verfahrensschritte zur Herstellung der Formteile angewandt wie bei dem diesseitig gezeigten Ausführungsbeispiel einer Herstellung von Platten.

Ein weiteres analoges Beispiel zeigt sich in der Möglichkeit, daß der Schichtstoff aus reinen Textilrecyclingstoffen besteht. Hierbei wird in den schon erfindungsgemäß benannten Verfahrensschritten die Außenbeschichtung oben und unten über die drei Preßvorgänge aufgebracht. Diese Platten bzw. Formteile aus dem Schichtstoff Textilrecyclingmaterial sind für einen Einsatzzweck im Nutzfahrzeug- und Schienenfahrzeugbau besonders gut geeignet. Bei allen möglichen Ausführungsbeispielen ist in jedem Fall der erfindungswesentliche Verfahrensgang der Aufbringung einer Außenschicht aus Polyesterfolie, Aufbringen des Schichtstoffes aus den vorgegebenen Recyclingmaterialien und Aufbringen einer weiteren Außenschicht oberhalb und nachfolgend der Vorgang der Vorverdichtung Heißpresse und Kaltpresse gegeben.

## Patentansprüche

1. Verfahren zur Herstellung von Platten, Formkörpern usw., die aus Recyclingstoffen bestehen, wobei ein vorgefertigtes Recyclinggemisch (Schichtstoff) mit Bindemittel als vorgeformter, in ausreagiertem oder nicht ausreagiertem Schichtstoff auf eine untere Außenbeschichtung aufgebracht wird und nachfolgend unter einem einstellbaren Druck eine Vorverdichtung des Schichtstoffes mit der Außenbeschichtung stattfindet, **dadurch gekennzeichnet,** daß vor der Vorverdichtung eine zweite Außenbeschichtung aus Polyesterfolie auf dem Schichtstoff angeordnet wird und nach der Vorverdichtung der Außenbeschichtungen und des Schichtstoffes ein Heißpreßvorgang mit 160 bis 190 ° unter einem Druck von 150 bis 400 bar stattfindet und nachfolgend ein Kaltpreßvorgang des Schichtstoffes mit den beiden Außenbeschichtungen unter einem Druck von 150 bis 400 bar durchgeführt wird.

2. Verfahren nach Anspruch 1, **dadurch gekennzeichnet,** daß als Bindemittel für den Schichtstoff Isocyanat mit Wasser verwendet wird.

3. Verfahren nach Anspruch 1, **dadurch gekennzeichnet,** daß die beiden Außenschichten aus Polyesterfolie/Polyesterharz in einem nicht ausgehärteten Zustand verwendet werden und je nach Anwendungsfall eine Stärke von 0,2 bis 5 mm aufweisen.

4. Verfahren nach Anspruch 1, **dadurch gekennzeichnet,** daß der Schichtstoff ausschließlich aus Recyclingmaterial besteht, welche zu hohem prozentualem Anteil Polyurethanreststoffe in Brocken-, Flocken- oder Mehlform beinhalten und weiterhin Glasfasern, Textilfasern, mineralische Stoffe wie Aluminium und Bauxit zugegeben werden.

5. Verfahren nach einem oder mehreren der obengenannten Ansprüchen, **dadurch gekennzeichnet,** daß bereits ausgehärteter Schichtstoff aus Recyclingmaterial in durch Preßvorgänge mit der Polyesterfolie als Außenbeschichtung versehen werden.

6. Verfahren nach einem oder mehreren der vorgenannten Ansprüche, dadurch gekennzeichnet, daß ein vorgeformter, ausreagierter qder nicht ausreagierter Schichtstoff aus Textilrecyclingstoffen mit einer unausgehärteten Polyesterfolie in Preßvorgängen verbunden werden.

## Claims

1. A method for producing boards, mouldings, etc. of recycling materials, in which a prefabricated recycling mixture (laminate) with binder, as preformed, fully or not fully reacted laminate, is doctored to a bottom external coating and subsequently a pre-densification of the laminate with the external coating is made under adjustable pressure, **characterised in that** prior to the pre-densification a second external coating of polyester film is arranged on the laminate and following the pre-densification of external coating and laminate a hot pressing process is performed at 160 to 190 °C and a pressure of 150 to 400 bar and subsequently a cold pressing process of the laminate with the two external coatings under a pressure of 150 to 400 bar.

2. A method according to claim 1, **characterised in that** isocyanate with water is used as binder for the laminate.

3. A method according to claim 1, **characterised in that** the two external coatings of polyester film/polyester resin are used in an uncured state with a thickness of 0.2 to 5 mm, depending on the application.

4. A method according to claim 1, **characterised in that** the laminate consists exclusively of recycling materials with a high percentage of polyurethane recyclings in the form of chunks, flakes or meal to which glass fibres, textile fibres, mineral materials, such as aluminium and bauxite, are added.

5. A method according to one or more of the above claims, **characterised in that** already cured laminate of recycling material is provided with polyester film as external coating by means of pressing processes.

6. A method according to one or more of the above claims, **characterised in that** a preformed, fully or not fully reacted laminate of textile recyclings is bonded with uncured polyester film in pressing processes.

## Revendications

1. Un procédé pour produire des plaques, des formes moulées etc. à partir de matières de recyclage, par lequel un corps composite recyclé (matériau stratifié), qui est préfabriqué par ajout d'un agent liant, étant amené à un état préformé de matériau stratifié et ayant été soumis à une réaction chimique ou non, se trouve déposé sur une couche de revêtement externe lui servant de support et par lequel, en suite de quoi, ce matériau stratifié est pré-comprimé avec la couche de revêtement externe, en subissant une pression réglable, **caractérisé par le fait qu'**avant cette pré-compression on dépose une deuxième couche de revêtement externe, composée d'un film polyester, sur le matériau stratifié et qu'après pré-compression des couches de revêtement externes et du matériau stratifié on pratique une opération de compression à chaud à une température de 160 à 190 °C et par une pression de 150 à 400 bars et qu'ensuite on procède à une compression à froid, par une pression de 150 à 400 bars, du matériau stratifié et des deux couches de revêtement externes.

2. Un procédé d'après la revendication n°1, **caractérisé par le fait que** l'on utilise une solution d'isocyanate diluée dans l'eau comme agent liant pour fabriquer le matériau stratifié.

3. Un procédé d'après la revendication n°1, **caractérisé par le fait que** les deux couches externes du film polyester/de résine polyester sont utilisées à l'état non polymérisé et que leur épaisseur varie entre 0,2 et 5 mm, en fonction de l'emploi souhaité.

4. Un procédé d'après la revendication n°1, **caractérisé par le fait que** le matériau stratifié se compose exclusivement de matières de recyclage, qui contiennent un pourcentage élevé de résidus de polyuréthane, administrés sous forme de blocs, de flocons ou de poudre, et auxquelles, en outre, on ajoute des fibres de verre, des fibres textiles et des matières minérales, telles que de l'aluminium et de la bauxite.

5. Un procédé d'après une ou plusieurs des revendications énumérées ci-dessus, **caractérisé par le fait qu'**un matériau stratifié déjà polymérisé, obtenu à partir de matières de recyclage, se trouve recouvert, à la faveur d'une série de compressions, d'un film polyester qui lui sert de couche de revêtement externe.

6. Un procédé d'après une ou plusieurs des revendications énumérées ci-dessus, **caractérisé par le fait qu'**un matériau stratifié préformé, obtenu à partir de matières textiles de recyclage, après avoir été soumis à une réaction chimique ou non, se trouve, à la faveur d'une série de compressions, combiné avec un film polyester non polymérisé.
